Europäisches Patentamt

European Patent Office

Office européen des brevets

(19)

(11) Veröffentlichungsnummer: **0 035 680**
**B1**

(12) **EUROPÄISCHE PATENTSCHRIFT**

(45) Veröffentlichungstag der Patentschrift:
30.05.84

(21) Anmeldenummer: 81101263.2

(22) Anmeldetag: 21.02.81

(51) Int. Cl.³: **G 01 P 5/12**, G 01 F 1/68,
F 02 D 5/00

(54) **Vorrichtung zur Messung der Strömungsgeschwindigkeiten von Gasen und Flüssigkeiten.**

(30) Priorität: 12.03.80 DE 3009382

(43) Veröffentlichungstag der Anmeldung:
16.09.81 Patentblatt 81/37

(45) Bekanntmachung des Hinweises auf die Patenterteilung:
30.05.84 Patentblatt 84/22

(84) Benannte Vertragsstaaten:
FR GB IT

(56) Entgegenhaltungen:
DE - B - 1 270 864
FR - A - 2 408 121
GB - A - 136 041
US - A - 3 433 069

(73) Patentinhaber: Degussa Aktiengesellschaft,
Weissfrauenstrasse 9, D-6000 Frankfurt am Main 1 (DE)

(72) Erfinder: Eiermann, Kurt, Dr.Dipl.Phys.,
Friedhofstrasse 26, D-6102 Pfungstadt 2 (DE)
Erfinder: Schäfer, Wolfgang, Dr., Grosser
Hasenpfad 137, D-6000 Frankfurt (DE)

## Beschreibung

Die Erfindung betrifft eine Vorrichtung zur Messung der Strömungsgeschwindigkeit von Gasen und Flüssigkeiten, insbesondere zur Messung der Ansaugluft von Verbrennungsmotoren, mit einem oder mehreren temperaturabhängigen Widerständen, von denen einer oder mehrere beheizt werden, wobei der oder die beheizten Widerstände in Strömungsrichtung gesehen hinter einem Schutzschild angeordnet sind und einer laminaren Strömung ausgesetzt werden, die mittels eines Bauelementes in Form eines Wabenkörpers erzeugt wird.

Im Interesse der Reinhaltung der Luft ist es erforderlich, die von Verbrennungsmotoren, insbesondere von Kraftfahrzeugen erzeugten Schadstoffe zu vermindern. Dieses Ziel wird u.a. durch eine Verbesserung des Verbrennungsablaufes erreicht. Dazu ist es erforderlich, dass möglichst genaue Informationen über die jeweils angesaugten Luftmengen zur Verfügung stehen, und zwar mit einer möglichst kleinen Zeitverzögerung.

Hitzdrahtanemometer verschiedener Bauart sind bereits für die Messung der von Verbrennungsmotoren angesaugten Luftmenge vorgeschlagen worden. Der entscheidende Nachteil herkömmlicher Hitzdrahtanemometer ist, dass in der angesaugten Luft mitgeführte Schmutzpartikel sich auf dem beheizten Widerstand ablagern und dadurch die Eichcharakteristik der Wärmeabgabe verändern. Um dies zu verhindern, ist vorgeschlagen worden als beheizten Widerstand einen Metallfilmwiderstand auf einer Trägerplatte zu verwenden und diesen so anzuordnen, dass die Staubablagerung nicht auf der wärmeabführenden Fläche erfolgt.

Dies kann einerseits angestrebt werden, indem man die der Strömung zugewandte Fläche möglichst klein gegenüber der wärmeabführenden Fläche macht.

Weitere Möglichkeiten sind, die der Strömung zugewandte Fläche des beheizten Widerstands thermisch zu isolieren oder den beheizten Widestand hinter einem Schutzschild anzuordnen. Die genannten Massnahmen bedingen jedoch eine Instabilität der Umströmung des beheizten Widerstands, die zu Schwankungen der Wärmeabfuhr und damit des Messsignals führt.

Es ist weiterhin vorgeschlagen worden, vor dem beheizten Widerstand ein Strömungshindernis anzuordnen, das zu einer stabilen turbulenten Umströmung des beheizten Widerstands führen soll. Sofern das Strömungshindernis geeignet ist, die Schmutzablagerung auf dem beheizten Widerstand im erforderlichen Masse zu verhindern, ist es nicht möglich, eine ausreichende Stabilität der turbulenten Strömung hinter diesem Strömungshindernis zu erzielen. Es zeigt sich, dass die Ausbildung der Strömung hinter dem Strömungshindernis in erheblichem Masse vom Turbulenzgrad der Strömung vor dem Hindernis abhängig ist, so dass eine empfindliche Abhängigkeit des Messsignals von Störungen am Lufteinlass resultiert.

In der FR-A-2 408 121 wird eine Vorrichtung beschrieben, bei der vor dem beheizten Widerstand ein Schutzschild angeordnet ist, das gleichzeitig als Bauelement zur Erzeugung einer laminaren Strömung dient.

Es war Aufgabe der vorliegenden Erfindung, eine Vorrichtung zur Messung der Strömungsgeschwindigkeit von Gasen und Flüssigkeiten, insbesondere der Ansaugluft von Verbrennungsmotoren zu finden, mit einem oder mehreren temperaturabhängigen Widerständen, von denen einer oder mehrere beheizt werden, wobei der oder die beheizten Widerstände in Strömungsrichtung gesehen hinter einem Schutzschild angeordnet sind und einer laminaren Strömung ausgesetzt werden, die mittels eines Bauelementes in Form eines Wabenkörpers erzeugt wird. Diese Vorrichtung sollte eine stabile Eichcharakteristik besitzen und in ihrem Ausgangssignal unabhängig von Störungen am Lufteinlass sein.

Diese Aufgabe wurde erfindungsgemäss dadurch gelöst, dass das Bauelement zur Erzeugung der laminaren Strömung hinter dem Schutzschild angeordnet ist und einen Hohlraum für die Aufnahme des beheizten Widerstands aufweist. Durch diese Anordnung erhält man einen stabilen Strömungszustand am Ort des beheizten Widerstands, so dass das erhaltene Messsignal in ausreichendem Masse unabhängig vom Turbulenzgrad der angeaugten Luft vor dem Schutzschild und somit auch unabhängig von Störungen am Lufteinlass wird.

Der beheizte Widerstand besteht vorzugsweise aus einem Metallfilm mit hohem Temperaturkoeffizienten auf einer elektrisch isolierenden Trägerplatte und ist in an sich bekannter Weise Bestandteil einer elektronischen Regeleinrichtung, so dass der Heizstrom ein Mass für die von der vorbeiströmenden Luft abgeführten Wärmeleistung ist.

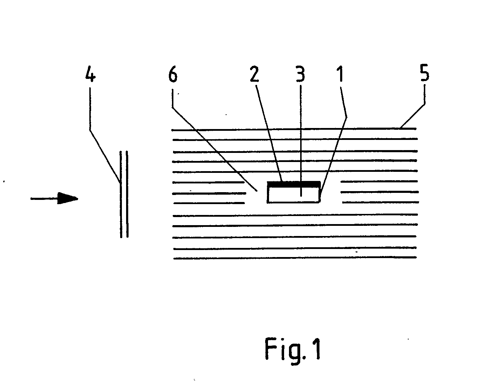

Die Abbildung zeigt schematisch die erfindungsgemässe Vorrichtung, bei der der beheizte Widerstand 1 in einem Hohlraum 6 des als Laminator dienenden Wabenkörpers 5 angeordnet ist.

Vor dem Wabenkörper 5, in Strömungsrichtung gesehen, ist ein Schutzschild 4, das sowohl als massiver Körper als auch als feines Drahtgitter ausgebildet sein kann. Der Wabenkörper 5 kann aus Röhren unterschiedlichen oder gleichen Durchmessers zusammengesetzt sein.

Der beheizte Widerstand 1 besteht aus einem Metallfilm 2, der auf einem elektrisch isolierenden Träger 3 aufgebracht ist.

Es kann vorteilhaft sein, die gesamte Anordnung, bestehend aus Schutzschild 4, Laminator 5 und beheizten Widerstand 1, innerhalb eines Rohres anzuordnen, das auf der Einlauf- und gegebenenfalls auch auf der Auslassseite als Düse, insbesondere als Venturi-Düse, ausgebildet ist. Es ist auch möglich, als beheizten Widerstand Drähte zu verwenden.

## Patentansprüche

1. Vorrichtung zur Messung der Strömungsgeschwindigkeit von Gasen und Flüssigkeiten, insbesondere der Ansaugluft von Verbrennungsmotoren, mit einem oder mehreren temperaturabhängigen Widerständen (1), von denen einer oder mehrere beheizt werden, wobei der oder die beheizten Widerstände in Strömungsrichtung gesehen hinter einem Schutzschild (4) angeordnet sind und einer laminaren Strömung ausgesetzt werden, die mittels eines Bauelementes (5) in Form eines Wabenkörpers erzeugt wird, dadurch gekennzeichnet, dass das Bauelement zur Erzeugung der laminaren Strömung hinter dem Schutzschild (4) angeordnet ist und einen Hohlraum (6) für die Aufnahme des beheizten Widerstands (1) aufweist.

2. Vorrichtung nach Anspruch 1, dadurch gekennzeichnet, dass der Schutzschild (4) aus einem massiven Körper oder einem Drahtgitter besteht.

3. Vorrichtung nach Anspruch 1 und 2, dadurch gekennzeichnet, dass die temperaturabhängigen Widerstände (1) aus einer dünnen Metallschicht (2) bestehen, die auf elektrisch isolierenden Trägern (3) aufgebracht sind.

**Claims**

1. An apparatus for measuring the flow velocity of gases and liquids, in particular the flow veloctiy of the intake air of internal combustion engines, having one or more temperature-responsive resistors (1), one or more of which is heated, the one or more hated resistors being arranged downstream of a protective shield (4) seen in the direction of flow and being subjected to a laminar flow, which is produced by a structural element (5) in the shape of a honeycomb body, characterised in that the structural element which produces the laminar flow is arranged downstream of the protective shield (4) and has a cavity (6) to accomodate the heated resistor (1).

2. An apparatus according to claim 1, characterised in that the protective shield (4) consists of a solid body or a wire grating.

3. An apparatus according to claims 1 and 2, characterised in that the temperature-responsive resistors (1) consist of a thin layer of metal (2), which is applied to electrically insulating supports (3).

**Revendications**

1. Dispositif destiné à mesurer la vitesse d'écoulement de gaz et de liquides, en particulier de l'air aspiré par les moteurs à combustion interne, comportant une ou plusieurs résistance (1) dépendant de la température, dont une ou plusieurs sont chauffées, où la ou les résistances chauffées sont disposées après, si l'on regarde dans le sens du courant, un écran protecteur (4) et sont soumises à un écoulement laminaire qui est produit au moyen d'un élément de la construction (5) en forme d'un corps en nid d'abeilles, dispositif caractérisé en ce que l'élément de construction (5) destiné à la production du courant laminaire est placé après l'écran protecteur (4) et comporte un espace creux (6) destiné à recevoir la résistance chauffée (1).

2. Dispositif suivant la revendication 1, caractérisé en ce que l'écran protecteur (4) est fait d'un corps massif ou d'une toile métallique.

3. Dispositif suivant l'une des revendications 1 et 2, caractérisé en ce que les résistances (1) dépendant de la chaleur, sont constituées par une mince couche métallique (2) et sont posées sur un support (3) isolant de l'électricité.

Fig.1